Europäisches Patentamt

European Patent Office

Office européen des brevets

(19)

(11) Publication number: **0 260 804 B1**

(12) **EUROPEAN PATENT SPECIFICATION**

(45) Date of publication of patent specification: **16.10.91**    (51) Int. Cl.⁵: **B60T 13/02**, F16D 65/46

(21) Application number: **87307007.2**

(22) Date of filing: **07.08.87**

(54) Linkage.

(30) Priority: **09.08.86 GB 8619491**

(43) Date of publication of application:
**23.03.88 Bulletin 88/12**

(45) Publication of the grant of the patent:
**16.10.91 Bulletin 91/42**

(84) Designated Contracting States:
**BE DE ES FR IT NL SE**

(56) References cited:
**DE-A- 3 341 451**
**FR-A- 2 417 681**
**US-A- 4 381 713**

(73) Proprietor: **BENDIX LIMITED**
**Douglas Road**
**Kingswood, Bristol BS15 2NL(GB)**

(72) Inventor: **Beesley, Guy Antony**
**48 Buckingham Road Petersfield Park**
**Chippenham Wilts. SN15 3TL(GB)**

(74) Representative: **Turner, Alan Reginald et al**
**BENDIX LIMITED Douglas Road**
**Kingswood, Bristol BS15 2NL(GB)**

## Description

This invention relates to a fluid pressure controllable brake actuator mechanism and relates especially, but not exclusively, to an improved form of yoke for use in transmitting a longitudinal force between a brake actuator rod and a transversely pivotted brake mechanism.

Fluid pressure operable spring force actuator mechanisms have previously been proposed which include internal screw thread adjustment mechanisms. One such actuator is described in the German Specification DE-A-3341451. In that mechanism which operates in the manner of an extendible strut under compression, rotation of the hand wheel causes rotation of a tubular part which by being provided with opposite handed internal and external screw threads enables the operative length of the actuator to be increased.

In heavy vehicle fluid pressure controllable spring brake actuators, which exert an output force in the form of a tension in an output rod there is a requirement however for a compact means whereby a brake may be manually released.

An object of the present invention is, therefore, to provide a brake actuator mechanism, particularly of a type which exerts output force in the form of a tension in an output rod and incorporating a possibility to release or wind off a longitudinal force between its actuator rod and a pivotted member such as a lever.

According to the present invention there is provided a fluid pressure controllable brake actuator mechanism comprising a housing and a fluid pressure operable member therein forming a wall of a chamber fluid pressure applied to said chamber acting to oppose the force of a compressed spring and release of said pressure permitting the force of the spring to be applied to a screw-threaded actuator output rod extending from the housing said output rod being threadedly received by a screw threaded first part said first part being screw threaded externally and internally and received by one end of an oppositely handed screw threaded second part via which brake output force is applied characterised in that said output rod extends through said spring which is thereby arranged on release of said pressure to apply a tension to said output rod and that said output rod is externally threaded to be received by an internal screw-thread of the first part the first part being provided with an external screw thread received by an internal screw thread of the second part whereby rotation of the first part relative to the second part results in release of said output force.

In order that the present invention may be more clearly understood and readily carried into effect, the same will be further described by way of example with reference to the accompanying drawings of which:-

Fig. 1    illustrates diagrammatically a typical compressed air operable spring brake actuator arrangement of a heavy road vehicle,

Fig. 2    illustrates a top view of two parts of a linkage in accordance with the invention,

Fig. 3    illustrates a part sectional side view of the two parts,

Fig. 4    illustrates an assembled linkage and,

Fig. 5    illustrated in, greater detail a spring brake actuator mechanism incorporating the linkage, in accordance with the invention.

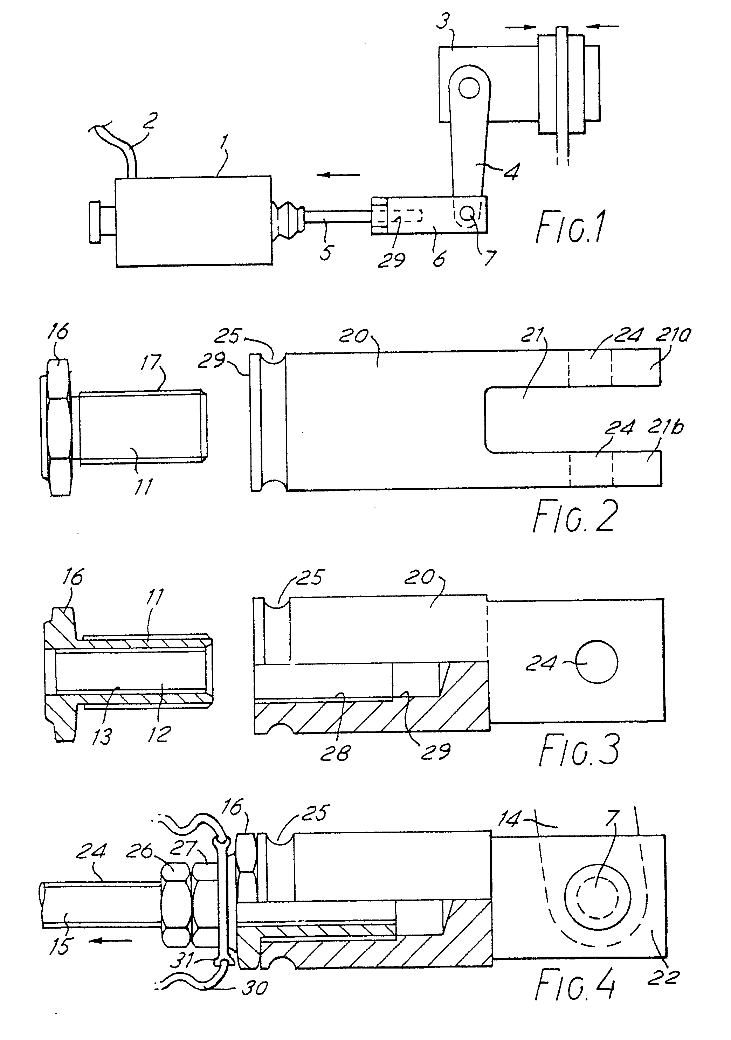

Referring to Fig. 1 of the drawings a compressed air operable spring brake actuator, denoted by reference 1, has a flexible compressed air input pipe 2 and is mounted on an axle of the vehicle. Typically, the actuator is mounted to be parallel to the axle and is one of two such actuators of the same axle, working on the respective wheels of the vehicle axle. The brake unit is typically a disc, brake unit 3 operated by a lever 4 via an adjustable yoke 6 pivotally connected to the lever 4 by a pivot pin 7. To apply the brake the lever is operated in a clockwise sense by the actuator 1 exerting a tensional force in the rod 5 and yoke 6.

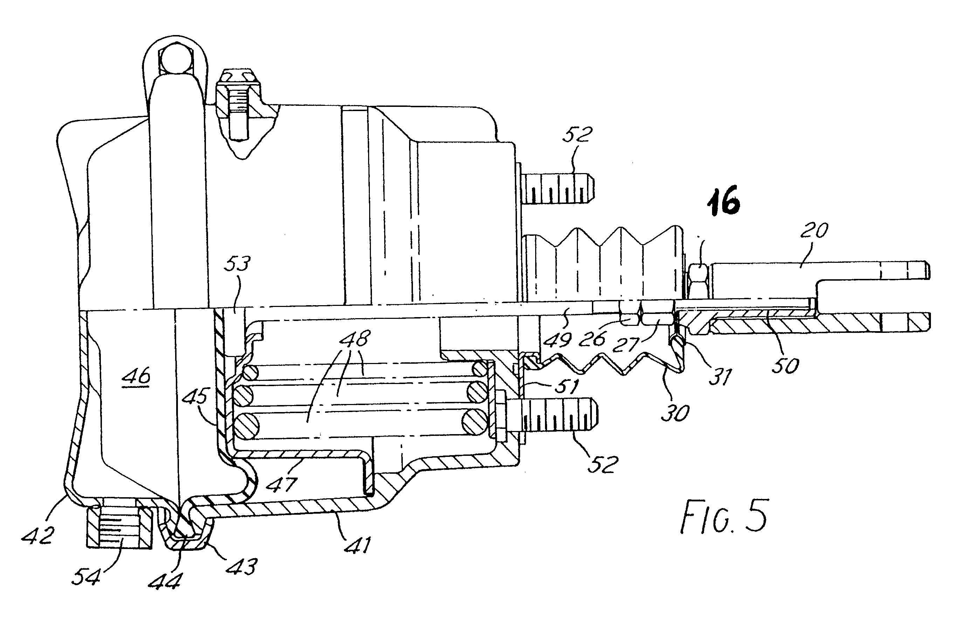

Referring to the subsequent drawings the two main parts of the yoke 6 of the linkage are shown in Figs. 2, 3 and 4. A generally cylindrical first part 11 has an axial bore 12, the bore having a right-handed internal screw thread 13 selected to marry with an external thread 24 (Fig. 4) of a brake actuator rod 15. Part 11 has a short hexagonal head portion 16 and an external left-handed screw thread 17 which marries with an internal screw thread 28(to be seen in the part-sectional view of Fig. 3,)provided in a bore 29 in the left hand end of a second generally cylindrical part 20. The right hand end of part 20 is provided with a through-slot 21 the width of which is chosen to provide spaced side cheeks 21a and 21b which accommodate the operable end of a brake mechanism lever 14 (Fig. 4). The side cheeks are provided with an aligned through-drilling 24 to receive a clevis pin 7. The part 20 is also provided with an annular groove 25 adjacent the left hand end to provide a convenient means, for locating one end of a protective flexible rubber boot, if required, enclosing the actuator rod 14 and preventing contaminents entering the actuator itself (not shown). Alternatively, such a boot 30 may be located on a clamped member 31 as shown in Fig. 4. The parts which are described above, constitute a yoke between the actuator rod 15 of a fluid pressure operable spring brake actuator and the lever 14, being a lever of a disc brake mechanism as refered to. The lever 14 may, if required, also incorporate a means for automatically compensating for brake wear.

To assemble the linkage a pair of lock nuts 26, 27 are first threaded onto the actuator rod followed by the part 20 with first part 20 already fitted and tightened into it. Part 20 is then positioned to give a predetermined length of actuator and linkage and the lock nuts are tightened together to set the desired length and to provide appropriate location between drilling 24 and the lever 14.

A typical spring brake actuator to which the present invention is more particularly applicable is illustrated in Fig. 5. The actuator comprises a main body 41 and a pressure plate 42 clamped to 41 by a clamping ring 43. The clamping ring 43 engages rims of the respective parts 41 and 42 between which a peripheral bead 44 of a pressure operable diaphragm 45 is clamped. The diaphragm 45 is shown in a position in which it is assumed that a full a releasing pressure is present in the chamber 46 formed on the left hand side of the diaphragm and the diaphragm acts against a generally cup-shaped member 47 to compress springs 48 which are captive there between and the right-hand end of the part 41. The actuator has an actuating rod 49 with a threaded end 50 co-operable with a yoke formed of parts 11 and 20 as described in the foregoing. In this case moreover a flexible boot 30 is provided, as previously referred to with reference to Fig. 4, the left hand end of which engages with a retaining plate 51, arranged to be clamped in position when the actuator is conventionally mounted to a bracket (not shown) on the vehicle axle by mounting studs 52.

The operation of such an actuator is well known, the output rod 49 having a head 53 whereby upon release of pressure from the chamber 46 via a control port 54, the cup-shaped member 47 being acted upon by springs 48, exerts a brake applying tension via the head 53.

Normally the brake is released by applying a releasing pressure to chamber 46 via port 54 and during normal running of the vehicle such a pressure is continuously maintained. However, in the event of the vehicle being parked and there being a requirement to release the brake, for example, to replace disc brake pads, the yoke described in the foregoing renders such release readily effectable. To effect such release the flexible boot 30 is manually released from the retaining member 31 by virtue of its elasticity thereby providing access to locking nut 27. By placing a spanner on nut 27 and another spanner on hexagon 16, rotation of 11 enables the length of the linkage to be effectively increased by virtue of the opposite hand threads provided on parts 11 and 20. After the necessary operations have been performed the assembly may be returned to its original condition by retightening the parts 11 and 20 together.

## Claims

1. A fluid pressure controllable brake actuator mechanism comprising a housing (41) and a fluid pressure operable member (45, 47) therein forming a wall of a chamber (46) fluid pressure applied to said chamber (46) acting to oppose the force of a compressed spring (48) and release of said pressure permitting the force of the spring (48) to be applied to a screw-threaded actuator output rod (49) extending from the housing said output rod (49) being threadedly received by a screw threaded first part said first part (11) being screw threaded externally and internally and received by one end of an oppositely handed screw threaded second part (20) via which brake output force is applied characterised in that said output rod (49) extends through said spring (48) which is thereby arranged on release of said pressure to apply a tension to said output rod and that said output rod (49) is externally threaded to be received by an internal screw-thread of the first part (11) the first part (11) being provided with an external screw thread received by an internal screw thread of the second part (20) whereby rotation of the first part (11) relative to the second part (20) results in release of said output force.

2. A brake actuator mechanism as claimed in claim 1, characterised by said first member (11) having a short hexagonal head portion (16).

3. A brake actuator mechanism as claimed in claim 1 or 2 characterised by said threaded rod member being provided with lock-nut means (26, 27).

4. A brake actuator mechanism as claimed in claim 1, 2 or 3 characterised by a flexible boot extending between said second part and said housing to enclose the unprotected part of the output rod (49) which extends from the housing.

## Revendications

1. Mécanisme d'actionnement de frein commandé à pression de fluide comportant un carter (41) et un élément actionnable par pression de fluide (45, 47) qui y constitue une paroi d'une chambre (46), une pression de fluide appliquée à ladite chambre (46) agissant pour s'opposer à l'effort exercé par un ressort comprimé (48) et le relâchement de ladite pression permettant l'application de l'effort exercé par le ressort (48) à une tige de sortie (49) filetée de dispositif d'actionnement, qui s'étend au-delà du carter, ladite tige de sortie (49) se vissant dans un premier élément taraudé (11), ce dernier étant fileté extérieurement et taraudé intérieurement et se vissant dans une extrémité d'un deuxième élément (20) taraudé en sens inverse et par l'intermédiaire duquel un effort de sortie de freinage est appliqué,
caractérisé en ce que ladite tige de sortie (49) s'étend à travers ledit ressort (48) qui est agencé pour appliquer, lors du relâchement de ladite pression, un effort de traction sur ladite tige de sortie,
et en ce que ladite tige de sortie (49) est filetée extérieurement pour se visser à la partie taraudée du premier élément (11), le premier élément (11) comporte un filetage extérieur qui se visse à la partie taraudée du deuxième élément (20) de telle façon que la rotation du premier élément (11) par rapport au deuxième élément (20) entraîne le relâchement de ladite force de sortie.

2.  Mécanisme d'actionnement de frein suivant la revendication 1, caractérisé en ce que ledit élément (11) comporte une partie courte (16) en forme de tête hexagonale.

3.  Mécanisme d'actionnement de frein suivant les revendications 1 ou 2, caractérisé en ce que ledit élément de tige filetée est pourvu d'écrous de blocage (26, 27).

4.  Mécanisme d'actionnement de frein suivant les revendications 1, 2 ou 3, caractérisé par un soufflet flexible s'étendant entre ledit deuxième élément et ledit carter pour enfermer la partie non protégée de la tige de sortie (49) qui s'étend au-delà du carter.

## Patentansprüche

1.  Mit Fluiddruck steuerbarer Bremsenbetätigungsmechanismus, umfassend ein Gehäuse (41) und einen mit Fluiddruck betätigbaren Teil (45,47) in dem Gehäuse, der eine Wand einer Kammer (46) bildet, wobei an die Kammer (46) angelegter Fluiddruck dahingehend wirkt, der Kraft einer zusammengedrückten Feder (48) entgegenzuwirken, und das Aufheben des Drucks es ermöglicht, daß die Kraft der Feder (48) an eine mit Schraubenge winde versehene Betätigungsausgangsstange (49) angelegt wird, die sich von dem Gehäuse erstreckt, wobei die Ausgangsstange (49) mittels Gewinde von einem mit Schraubengewinde versehenen ersten Teil (11) aufgenommen ist, der mit Außengewinde und mit Innengewinde versehen und von einem Ende eines zweiten Teils (20) aufgenommen ist, der ein entgegengesetztes Gewinde hat und über den eine Bremsenausgangskraft angelegt wird,
dadurch gekennzeichnet, daß die Ausgangsstange (49) sich durch die Feder (48) erstreckt, die dadurch derart angeordnet ist, daß sie beim Aufheben des genannten Drucks eine Spannung an die Ausgangsstange anlegt, und daß die Ausgangsstange (49) mit Außengewinde versehen ist zwecks Aufnahme von einem Innengewinde des ersten Teils (11), der mit einem Außengewinde versehen ist, welches von einem Innengewinde des zweiten Teils (20) aufgenommen ist, wodurch Drehung des ersten Teils (11) relativ zu dem zweiten Teil (20) zum Aufheben der Ausgangskraft führt.

2.  Bremsenbetätigungsmechanismus nach Anspruch 1, dadurch gekennzeichnet, daß der erste Teil (11) einen kurzen sechseckigen Kopfteil (16) hat.

3.  Bremsenbetätigungsmechanismus nach Anspruch 1 oder 2, dadurch gekennzeichnet, daß der mit Gewinde versehene Stangenteil mit einer Sicherungsmuttereinrichtung (26,27) versehen ist.

4.  Bremsenbetätigungsmechanismus nach Anspruch 1, 2 oder 3, gekennzeichnet durch eine biegsame Haube, die sich zwischen dem zweiten Teil und dem Gehäuse erstreckt, um den ungeschützten Teil der Ausgangsstange (49), der sich aus dem Gehäuse erstreckt, zu umschließen.

FIG.1

FIG.2

FIG.3

FIG.4

FIG. 5

16

20

50

31

30

49 26 27

51

52

52

53

48

47

45

46

41

43

44

54

42